**Europäisches Patentamt**

**European Patent Office**

**Office européen des brevets**

(19)

(11) Veröffentlichungsnummer: **0 088 720**
**B1**

(12) **EUROPÄISCHE PATENTSCHRIFT**

(45) Veröffentlichungstag der Patentschrift:
06.08.86

(51) Int. Cl.⁴: **B 65 G  51/26,** B 65 G  51/32

(21) Anmeldenummer: **83730020.1**

(22) Anmeldetag: **15.02.83**

(54) **Rohrpostendstation.**

(30) Priorität: **10.03.82  DE 3209026**

(43) Veröffentlichungstag der Anmeldung:
**14.09.83 Patentblatt 83/37**

(45) Bekanntmachung des Hinweises auf die Patenterteilung:
**06.08.86 Patentblatt 86/32**

(84) Benannte Vertragsstaaten:
**AT CH DE FR LI**

(56) Entgegenhaltungen:
**EP - A - 0 056 559**
**DE - A - 2 400 131**
**DE - A - 2 739 521**
**DE - C - 1 125 849**

(73) Patentinhaber: **Siemens Aktiengesellschaft Berlin und München, Wittelsbacherplatz 2, D-8000 München 2 (DE)**

(72) Erfinder: **Kardinal, Hans-Joachim, Ing. (grad.), Am Waldhaus 27, D-1000 Berlin 38 (DE)**

ACTORUM AG

## Beschreibung

Die Erfindung ist eine Rohrpostendstation zum Senden und Empfangen von Rohrpostbüchsen mit einem einer oberen Begrenzungswand eines Stationsgehäuses zugeordneten Rohrstutzen zum Anschluss eines Fahrrohres, mit einer Einschleusöffnung für abzusendende Rohrpostbüchsen in derselben Begrenzungswand und einer Ausschleusöffnung für empfangene Rohrpostbüchsen an der gegenüberliegenden unteren Begrenzungswand sowie mit einem zum Empfang einer Rohrpostbüchse in die Flucht des Rohrstutzens einfahrbaren beidseitig offenen Rohr, das in dieser Stellung durch ausserhalb des lichten Querschnitts des Rohres gelegene Dichtmittel und die untere Begrenzungswand im Sinne des Aufbaus eines die ankomme Rohrpostbüchse abbremsenden Luftpolsters abgeschlossen ist und das zur Ausschleusung der empfangenen Rohrpostbüchse in die Flucht der Ausschleusöffnung verfahrbar ist, und einer parallel zum Rohr ausgerichteten und gemeinsam mit ihm verfahrbaren, an ihrem unteren Ende abgeschlossenen und unterhalb ihres oberen Randbereichs mit einer Luftzutrittsöffnung versehenden Rohrkammer, die zur Aufnahme einer abzusendenden Rohrpostbüchse in die Flucht der Einschleusöffnung und zur Überführung dieser Rohrpostbüchse in das Fahrrohr mittels eines durch die Luftzutrittsöffnung geführten Luftstromes in die Flucht des Rohrstutzens einfahrbar ist.

Zum einschlägigen Stand der Technik gehört gemäss Artikel 54 (3) EPÜ die EP-A-56 559. Diese betrifft eine Rohrpoststation zum Senden, Empfangen und Passierenlassen von Rohrpostbüchsen. Wesentliche konstruktive Bestandteile dieser Rohrpoststation sind zwei fluchtende Öffnungen in einander gegenüberliegenden Begrenzungswänden eines Stationsgehäuses zur Aufnahme zweier Fahrrohrstutzen für ein ankommendes bzw. ein abgehendes Fahrrohr, je eine weitere Öffnung in diesen Begrenzungswänden zum Einschleusen abzusendender bzw. Ausschleusen empfangener Rohrpostbüchsen und eine Rohrkammer, deren offenes Ende nach unten weist und wahlweise in die Flucht des ankommenden Fahrrohres oder der Ausschleusöffnung einfahrbar ist und in die ein Luftleitkanal einmündet, der in der Empfangsstellung der Rohrpoststation das abgehende mit dem ankommenden Fahrrohr unter Einbeziehung eines unteren Teilbereichs der Rohrkammer pneumatisch verbindet.

Die erfindungsgemässe Rohrpoststation stellt im Gegensatz zur bekannten Rohrpoststation eine Sende- und Empfangsstation am Ende eines Fahrrohres dar, obwohl insbesondere die steuerungstechnische Ausbildung und Funktion der erfindungsgemässen Rohrpoststation gegenüber der bekannten Rohrpoststation keine wesentlichen Änderungen erfährt.

Die Anpassung der bekannten Rohrpoststation an die veränderte Arbeitsweise als reine Sende- und Empfangsstation erfolgt im wesentlichen durch eine Veränderung der üblichen Einbaulage – Drehung um 180° – sowie durch geringfügige konstruktive Anpassungen. Diese Anpassungen bestehen in der Verhinderung des Luftaustritts aus der zweiten Rohrkammer und der Schaffung eines Luftzutritts für die Rohrkammer. In diesem Zusammenhang sieht eine vorteilhafte Weiterbildung der Erfindung vor, dass ein Rohrstutzen zum Anschluss eines mit dem Fahrrohr fluchtenden weiteren Fahrrohres entfernt und die verbleibende Öffnung im Gehäuse mit einer Abdeckplatte abgedeckt ist.

Die notwendige Abdichtung der zweiten Rohrkammer wird dabei dadurch bewirkt, dass an der oberen und der unteren Begrenzungswand des Stationsgehäuses Dichtringe angeordnet sind, die bei der mit dem Fahrrohr fluchtenden Stellung der Rohrkammer an deren Stirnflächen anliegen. Vorzugsweise nehmen ringförmige Nuten in den Begrenzungswänden die Dichtringe auf.

Der notwendige Luftzutritt zur Rohrkammer wird gemäss einer weiteren Ausgestaltung der Erfindung in einfachster Weise dadurch hergestellt, dass die Luftzutrittsöffnung in der Mantelfläche der Rohrkammer vorgesehen ist.

Um die Nutzung des gleichen Stationsgehäuses sowohl für die bekannte Rohrpoststation zum Senden, Empfangen und Passierenlassen Rohrpostbüchsen als auch für die erfindungsgemässe Rohrpoststation zum Senden und Empfangen von Rohrpostbüchsen zu erleichtern, sieht eine vorteilhafte Ausgestaltung der Erfindung vor, dass manuell bedienbare Schalt- und Steuerelemente der Rohrpoststation in zwei um 180° gegeneinander versetzten Einbaulagen arretierbar sind. Insbesondere beschriftete Schalt- und Steuerelemente bzw. lediglich die Beschriftung solcher Elemente können dabei je nach Einbaulage der Station so arretiert werden, dass die Lesbarkeit der Beschriftung sichergestellt ist.

Die Erfindung wird im folgenden anhand eines figürlich dargestellten Ausführungsbeispiels erläutert.

Innerhalb eines Gehäuses 1 ist ein Tragkörper 2 mit einer Rohrkammer 3 und einer zweiten Rohrkammer 4 verschiebbar gelagert. In das Gehäuse 1 der Rohrpoststation führt ein ankommendes Fahrrohr 5 sowie eine der Aufgabe abzusendender Rohrpostbüchsen dienende Einschleusöffnung 6. Eine weitere Öffnung 7 innerhalb des Gehäuses 1 dient der Ausschleusung empfangener Rohrpostbüchsen.

Weitere Öffnungen 8, 9 im Gehäuse 1, die für die Arbeitsweise der dargestellten Rohrpoststation als Verzweigungseinrichtung für den Anschluss eines Speicherrohres bzw. als Sende-, Empfangs- und Durchgangsstation notwendig sind, sind mittels Abdeckplatten 10, 11 verschlossen.

Die Verschiebung des Tragkörpers 2 erfolgt mittels einer nur schematisch angedeuteten Kurbelschwinge 12, die mittels eines Kurbelzapfens 13 in eine Schlitzführung 14 eingreift. Die Rohrkammer 3 des Tragkörpers 2 weist eine Öffnung 15 in ihrer Mantelfläche auf, wogegen der obere Randbereich der Rohrkammer 3 wie auch der Rohrkammer 4 mittels eines Dichtringes 16 gegen Luftaustritt bzw. Luftzutritt abgedichtet ist. Auch im unteren Randbereich des Gehäuses 1 befindet sich ein Dichtring 17, der das Austreten von Luft während des Empfangs einer Rohrpostbüchse verhindert.

In der dargestellten Lage des Tragkörpers 2 ist die Rohrpoststation sowohl zur Aufgabe einer abzusendenden Rohrpostbüchse durch den Rohrstutzen 6 als auch zum Empfang einer Rohrpostbüchse aus dem Fahrrohr 5 vorbereitet. Eine aus dem Fahrrohr 5 ankommende Rohrpostbüchse wird durch den sich unterhalb von ihr aufbauenden Luftpuffer pneumatisch gebremst bis auf die Bodenfläche im Bereich der Rohrkammer herabgeführt. Die Bodenfläche kann dabei so ausgestaltet sein, dass der Dichtring 17 ein späteres Verschieben des Tragkörpers 2 mit einer innerhalb der Rohrkammer 4 befindlichen Rohrpostbüchse nicht behindert. Beim Verschieben des Tragkörpers 2 in eine Lage, in der die Rohrkammer 3 mit dem Fahrrohr 5 bzw. die zweite Rohrkammer 4 mit der Öffnung 7 im Gehäuse 1 fluchtet, wird eine vorher empfangene Rohrpostbüchse durch die Öffnung 7 herausgeführt. In dieser Stellung ist eine Absendung einer in der Rohrkammer 3 lagernden Rohrpostbüchse möglich.

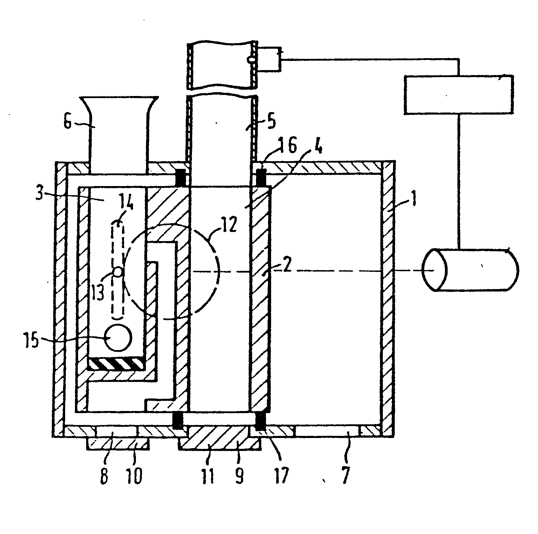

**Patentansprüche**

1. Rohrpostendstation zum Senden und Empfangen von Rohrpostbüchsen mit einem einer oberen Begrenzungswand eines Stationsgehäuses (1) zugeordneten Rohrstutzen zum Anschluss eines Fahrrohres (5), mit einer Einschleusöffnung (6) für abzusendende Rohrpostbüchsen in derselben Begrenzungswand und einer Ausschleusöffnung (7) für empfangene Rohrpostbüchsen an der gegenüberliegenden unteren Begrenzungswand sowie mit einem zum Empfang einer Rohrpostbüchse in die Flucht des Rohrstutzens einfahrbaren beidseitig offenen Rohr (4), das in dieser Stellung durch ausserhalb des lichten Querschnitts des Rohres (4) gelegene Dichtmittel (16, 17) und die untere Begrenzungswand im Sinne des Aufbaus eines die ankommende Rohrpostbüchse abbremsenden Luftpolsters abgeschlossen ist und das zur Ausschleusung der empfangenen Rohrpostbüchse in die Flucht der Ausschleusöffnung (7) verfahrbar ist, und einer parallel zum Rohr (4) ausgerichteten und gemeinsam mit ihm verfahrbaren, an ihrem unteren Ende abgeschlossenen und unterhalb ihres oberen Randbereichs mit einer Luftzutrittsöffnung (15) versehenen Rohrkammer (3), die zur Aufnahme einer abzusendenden Rohrpostbüchse in die Flucht der Einschleusöffnung (6) und zur Überführung dieser Rohrpostbüchse in das Fahrrohr (5) mittels eines durch die Luftzutrittsöffnung (15) geführten Luftstromes in die Flucht des Rohrstutzens einfahrbar ist.

2. Rohrpostendstation nach Anspruch 1, dadurch gekennzeichnet, dass als Stationsgehäuse (1) das Gehäuse einer neben dem Senden und Empfangen zusätzlich dem Passierenlassen von Rohrpostbüchsen dienenden Durchgangsstation in einer um zumindest annähernd 180° gedrehten Einbaulage verwendet ist, in der ein Rohrstutzen zum Anschluss eines mit dem Fahrrohr (5) fluchtenden weiteren Fahrrohres entfernt und die verbleibende Öffnung (9) im Gehäuse mit einer Abdeckplatte (11) abgedeckt ist.

3. Rohrpostendstation nach Anspruch 1 oder 2, dadurch gekennzeichnet, dass an der oberen und der unteren Begrenzungswand des Stationsgehäuses (1) die Dichtmittel (16, 17) angeordnet sind, die bei der mit dem Fahrrohr (5) fluchtenden Stellung des Rohres (4) an dessen Stirnflächen anliegende Dichtringe sind.

4. Rohrpostendstation nach Anspruch 3, dadurch gekennzeichnet, dass ringförmige Nuten in den Begrenzungswänden die Dichtringe (16, 17) aufnehmen.

5. Rohrpoststation nach einem der Ansprüche 1 bis 4, dadurch gekennzeichnet, dass die Luftzutrittsöffnung (15) in der Mantelfläche der Rohrkammer (3) vorgesehen ist.

6. Rohrpostendstation nach einem der Ansprüche 1 bis 5, dadurch gekennzeichnet, dass manuell bedienbare Schalt- und Steuerelemente der Rohrpoststation in zwei um 180° gegeneinander versetzten Einbaulagen arretierbar sind.

**Claims**

1. A pneumatic tube terminal for sending and receiving pneumatic dispatch carriers, comprising a sleeve assigned to the upper boundary wall of a station housing (1) and serving for the connection of a pneumatic tube (5); a charging opening (6) in the same boundary wall for pneumatic dispatch carriers to be dispatched; a discharge opening (7) for received pneumatic dispatch carriers on the opposite lower boundary wall; a tube (4) which is open at both ends and can be inserted into alignment with the sleeve in order to receive a pneumatic dispatch carrier and which, in this position, is sealed by sealing means (16, 17), which are positioned outside the inner diameter of the tube (4), and the lower boundary wall, so as to form an air cushion which slows down the incoming pneumatic dispatch carrier, and which tube can be displaced into alignment with the discharge opening (7) in order to discharge the received pneumatic dispatch carrier; and a tube chamber (3) which is aligned parallel to the tube (4) and can be displaced together with said tube and which is sealed at its lower end and provided with an air inlet opening (15) below its upper boundary region and which in order to accommodate a pneumatic dispatch carrier which is to be sent off, can be inserted into the alignment of the charging opening (6), and which, in order to transfer said pneumatic dispatch carrier into the pneumatic tube (5) by means of an air flow passed through the air inlet opening (15) can be displaced into alignment with the sleeve.

2. A pneumatic tube terminal as claimed in Claim 1, characterised in that as the station housing (1), there is used the housing of a transit station, which in addition to sending and receiving, serves to allow pneumatic dispatch carriers to pass, in an installation position which is rotated through at least approximately 180°, and in which a sleeve is removed for the connection of a further pneumatic tube, in alignment with the pneumatic tube (5), has been removed, and the resulting opening (9) in the housing is covered with a covering plate (11).

3. A pneumatic tube terminal as claimed in Claim 1 or Claim 2, characterised in that on the upper and lower boundary walls of the stationary housing (1) the sealing means (16, 17) are arranged which in the position of the tube (4) in alignment with the pneumatic tube (5), constitute sealing rings abutting against the end faces of said tube.

4. A pneumatic tube terminal as claimed in Claim 3, characterised in that annular grooves in the boundary walls accomodate the sealing rings (16, 17).

5. A pneumatic tube terminal as claimed in one of Claims 1 to 4, characterised in that the air inlet opening (15) is arranged in the generated surface of the tube chamber (3).

6. A pneumatic tube terminal as claimed in one of Claims 1 to 5, characterised in that manually operable switching and control elements of the pneumatic tube station can be locked in two installation positions which are staggered through 180°.

**Revendications**

1. Station terminale de poste pneumatique servant à l'expédition et à la réception de boîtes d'envoi, comportant une tubulure associée à une paroi limite supérieure d'un logement (1) de la station, pour le raccordement d'un tube de circulation (5), une ouverture en forme de sas d'accès (6) prévue pour des boîtes d'envoi devant être expédiées et ménagée dans la paroi limite de la station, et une ouverture formant sas de sortie (7) prévue pour des boîtes d'envoi reçues et ménagée dans la paroi limite inférieure opposée, ainsi qu'un tube (4) ouvert à ses deux extrémités et pouvant être amené en position alignée avec la tubulure en vue de recevoir une boîte d'envoi et qui dans cette position, est fermé par des moyens d'étanchéité (16, 17) disposés à l'extérieur de la section transversale intérieure du tube (4), et par la paroi limite inférieure, dans le sens de l'établissement d'un coussin d'air freinant la boîte d'envoi arrivante, et qui peut être amené en position alignée avec l'ouverture formant sas de sortie (7) afin de permettre la délivrance de la boîte d'envoi reçue, et une chambre tubulaire (3) orientée de manière à être parallèle au tube (4) et déplaçable en commun avec ce dernier et fermée à son extrémité inférieure et comportant au-dessous de sa zone marginale supérieure, une ouverture (15) d'accès de l'air et qui peut être amenée en position alignée avec l'ouverture formant sas d'accès (6) pour la prise en charge d'une boîte d'envoi devant être expédiée, et peut être amenée en position alignée avec la tubulure, pour le transfert de cette boîte d'envoi dans le tube de circulation (5) au moyen d'un courant d'air envoyé par l'ouverture (15) de pénétration de l'air.

2. Station terminale de poste pneumatique suivant la revendication 1, caractérisée par le fait qu'on utilise comme boîtier (1) de la station, le boîtier d'un poste de transit utilisé non seulement pour l'expédition et la réception, mais également pour la transmission de boîtes d'envoi, dans une position de montage pivotée au moins approximativement de 180° et dans laquelle unte tubulure servant au raccordement d'un autre tube de circulation aligné avec le tube de circulation (5) est retirée et l'ouverture subsistante (9) ménagée dans le boîtier est fermée par une plaque de fermeture (11).

3. Station terminale de poste pneumatique suivant la revendication 1 ou 2, caractérisée par le fait que les moyens d'étanchéité (16, 17), qui sont des bagues d'étanchéité appliquées contre les surfaces frontales du tube (4) lorsque ce dernier se trouve dans sa position éloignée avec le tube de circulation (5), sont disposées sur la paroi limite supérieure et sur la paroi limite inférieure du boîtier (1) de la station.

4. Station terminale de poste pneumatique suivant la revendication 3, caractérisée par le fait que des rainures annulaires ménagées dans les parois limites logent les garnitures d'étanchéité (16, 17).

5. Station terminale de poste pneumatique suivant l'une des revendications 1 à 4, caractérisée par le fait que l'ouverture (15) d'accès de l'air est prévue dans la surface enveloppe de la chambre tubulaire.

6. Station terminale de poste pneumatique suivant l'une des revendications 1 à 5, caractérisée par le fait que des organes de commutation et de commande, pouvant être manœuvrés manuellement, de la station de poste pneumatique, peuvent être bloqués dans deux positions d'insertion décalées réciproquement de 180°.